# EUROPEAN PATENT APPLICATION

(11) **EP 3 603 878 A1**
(43) Date of publication of application: **05.02.2020**
(21) Application number: 18775517.8
(22) Date of filing: 30.03.2018
(51) Int. Cl.: B23K 35/362

(54) **FLUX FOR SUBMERGED ARC WELDING**

(30) Priority: 31.03.2017 JP 2017069912
(71) Applicant: Kabushiki Kaisha Kobe Seiko Sho (Kobe Steel, Ltd.), Kobe-shi, Hyogo 651-8585 (JP)
(72) Inventor: TOYODA Takamasa, Kanagawa 251-8551 (JP); SUENAGA Kazuyuki, Kanagawa 251-8551 (JP)
(74) Representative: Müller-Boré & Partner Patentanwälte PartG mbB
(86) International application number: PCT/JP2018/013999
(87) International publication number: WO 2018/182025

(57) **Abstract**

This flux for submerged arc welding is characterized by containing from 1% by mass to 25% by mass of an oxide of an alkaline earth metal, and is also characterized in that the oxide of an alkaline earth metal is contained in a liquid glass structure. It is preferable that the alkaline earth metal is one or both of Ca and Ba. It is also preferable that the water content of this flux as determined in accordance with JIS K 0068 (2001) is 200 ppm or less immediately after drying and is 1,000 ppm or less after 24-hour moisture absorption.

## Description

### Technical Field

The present invention relates to a flux for submerged arc welding.

### Background Art

Fluxes for use in submerged arc welding are mainly classified into a fused flux and a sintered flux in terms of a form thereof. The fused flux is produced by melting various raw materials in an electric furnace or the like and crushing the materials. On the one hand, the sintered flux is produced by bonding various raw materials with a binder such as an alkali silicate, granulating them, and thereafter sintering the granulated materials.

The sintered flux is classified depending on the sintering temperature, and is generally classified into a low-temperature sintered flux produced by sintering at 400°C to 600°C and a high-temperature sintered flux produced by sintering at 600°C to 1,200°C.

The high-temperature sintered flux has excellent bead appearance and welding workability such as slag removability. On the other hand, since the high-temperature sintered flux leads to a higher amount of diffusible hydrogen in a weld metal than the case of the fused flux or the low-temperature sintered flux and is inferior in low temperature cracking resistance, it is seldom used in Japan. In this description, the term "weld metal" refers to a metal which has been melted and solidified during welding when the welding is performed.

Under such situations, Patent Literature 1 describes a sintered flux for submerged arc welding which can reduce the amount of diffusible hydrogen in a weld metal and can prevent the deterioration in workability caused by the powdering of the flux, and which can give excellent moisture absorption resistance and powder resistance. Such a sintered flux for submerged arc welding is a flux obtained by adding a binder to a raw material powder adjusted such that a ratio of particles having a particle diameter of more than 300 µm is 10% by mass or less and a ratio of particles having a particle diameter of less than 75 µm is 30% by mass or less and mixing them, granulating the mixture and sintering the granulated mixture. The sintered flux for submerged arc welding contains: SiO₂: 30% by mass to 70% by mass; a manganese oxide (in terms of MnO): 5% by mass to 30% by mass; MgO: 3% by mass to 30% by mass; and Al₂O₃: 2% by mass to 20% by mass, as component compositions thereof.

### Citation List

### Patent Literature

Patent Literature 1: JP-A-2001-38486

### Summary of Invention

### Technical Problem

The sintered flux for submerged arc welding described in Patent Literature 1 is excellent in moisture absorption resistance, but is slightly inferior in moisture absorption resistance as compared with the fused flux. Thus, the sintered flux for submerged arc welding tends to give an amount of diffusible hydrogen slightly higher than the case of the fused flux, and thus tends to give a poor low temperature cracking resistance.

The present invention has been achieved in view of these circumstances, and an object of the present invention is to provide a flux for submerged arc welding which gives excellent low temperature cracking resistance.

### Solution to Problem

For the high-temperature sintered flux in the related art, a technique of reducing the amount of diffusible hydrogen by making the flux vitreous to prevent moisture absorption as in the fused flux, or a technique of reducing the amount of diffusible hydrogen by making the carbonate remain in the final product to reduce a hydrogen partial pressure during welding as in the low-temperature sintered flux is not existed.

The present inventor has made intensive studies to solve the above problems. As a result, it has been found that by containing an oxide of an alkaline earth metal in a water glass structure covering a powder surface, the glass structure is stabilized, and the moisture absorption amount is reduced to the same extent as the fused flux. Accordingly, the amount of diffusible hydrogen can be reduced and the low temperature cracking resistance can be made excellent. Thus, the present invention has been completed.

A flux for submerged arc welding in the present invention which solves the above problems contains an oxide of an alkaline earth metal in an amount of 1% by mass or more and 25% by mass or less and the oxide of the alkaline earth metal is contained in a water glass structure.

Since the flux for submerged arc welding in the present invention contains the oxide of an alkaline earth metal in the water glass structure covering the powder surface, the glass structure is stabilized, and the moisture absorption amount is reduced to the same extent as the fused flux. That is, by containing of the oxide of an alkaline earth metal in a Si-O chain of water glass, the glass structure is more stable, and the moisture absorption amount is reduced since chain ends (-ONa, -OH) decrease. Accordingly, a flux for submerged arc welding giving a reduced amount of diffusible hydrogen and giving excellent low temperature cracking resistance is obtained.

It is preferred that, in the flux for submerged arc welding in the present invention, the alkaline earth metal is one or both of Ca and Ba.

Due to this feature, a flux for submerged arc welding giving excellent low temperature cracking resistance can be obtained more reliably.

It is preferred that, in the flux for submerged arc welding in the present invention, a moisture content immediately after drying, as measured in accordance with JIS K0068:2001, is 200 ppm or less, and a moisture content after moisture absorption for 24 hours, as measured in accordance with JIS K0068:2001, is 1000 ppm or less.

In addition to the feature that the moisture content contained in the flux is small, since the amount of moisture absorption is small as described above, a flux for submerged arc welding giving a further reduced amount of diffusible hydrogen and giving excellent low temperature cracking resistance can be obtained.

It is preferred that the flux for submerged arc welding in the present invention is obtained by blending an alkaline earth metal raw material and water glass and sintering the blend at 600°C or higher.

Since in the flux for submerged arc welding in the present invention, the alkaline earth metal and water glass are reacted during sintering at 600°C or higher and the oxide of an alkaline earth metal is contained in the water glass structure covering the powder surface, the glass structure can be stabilized.

It is preferred that, in the flux for submerged arc welding in the present invention, the alkaline earth metal raw material is an alkaline earth metal carbonate.

In addition, it is preferred that, in the flux for submerged arc welding in the present invention, the alkaline earth metal carbonate is one or both of CaCO₃ and BaCO₃.

Due to this feature, a flux for submerged arc welding can be obtained inexpensively while being easy to handle during the production.

### Advantageous Effects of Invention

The flux for submerged arc welding in the present invention gives excellent low temperature cracking resistance.

### Brief Description of Drawings

FIG. 1 is an SEM photograph (magnification: 400 times) of a flux in No. 10 which is a working example. In FIG. 1, the lower right scale bar indicates 10 µm.
FIG. 2 is an SEM photograph (magnification: 400 times) of a flux in No. 29 which is a comparative example. In FIG. 2, the lower right scale bar indicates 10 µm.
In FIG. 3, (a) is an SEM photograph of the flux in No. 10 which is a working example, and (b) to (d) are X-ray mappings by EDS at the same position as (a). In FIG. 3, (b) is an X-ray mapping for Na, (c) is an X-ray mapping for Si, and (d) is an X-ray mapping for Ba.
FIG. 4 is an EDS spectrum of the flux in No. 10 which is a working example.
In FIG. 5, (a) is an SEM photograph of the flux in No. 29 which is a comparative example, and (b) to (d) are X-ray mappings by EDS at the same position as (a). In FIG. 5, (b) is an X-ray mapping for Na, (c) is an X-ray mapping for Si, and (d) is an X-ray mapping for Ba.
FIG. 6 is an EDS spectrum of the flux in No. 29 which is a comparative example.

### Description of Embodiments

Embodiment of a flux for submerged arc welding in the present invention (hereinafter simply referred to as "flux" in some cases) are described below in detail.

The flux in the present embodiment is referred to as a high-temperature sintered flux sintered at 600°C or higher.

The flux in the present embodiment contains an oxide of an alkaline earth metal in an amount of 1% by mass or more and 25% by mass or less, and the oxide of the alkaline earth metal is contained in a water glass structure.

### (Oxide of alkaline earth metal: 1% by mass or more and 25% by mass or less)

The oxide of an alkaline earth metal has the effect of stabilizing the glass structure, and in order to exert this effect, it is necessary to contain the oxide in an amount of 1% by mass or more in the flux. On the other hand, when the amount of free alkali metals (Na, K, etc.) excluded from the water glass structure increases when the oxide of an alkaline earth metal is contained in the flux in an amount of more than 25% by mass, the moisture content in the flux increases. Thus, the amount of diffusible hydrogen is increased and the low temperature cracking resistance is deteriorated. Therefore, the oxide of an alkaline earth metal is contained in an amount of 1% by mass or more and 25% by mass or less. From the viewpoint of further improving the effects, the oxide of an alkaline earth metal is contained in an amount of preferably 2% by mass or more, and more preferably 3% by mass or more. In addition, from the viewpoint of further improving the low temperature cracking resistance, the oxide of an alkaline earth metal is contained in an amount of preferably 24% by mass or less, and more preferably 23% by mass or less.

Examples of the alkaline earth metal include Ca, Sr, Ba, and Ra. Among these, it is preferred that one or both of Ca and Ba are used as the alkaline earth metal in the present embodiment. That is, the flux in the present embodiment preferably contains one or both of CaO and BaO as the oxide of an alkaline earth metal. Thus, a flux for submerged arc welding giving excellent low temperature cracking resistance can be obtained more reliably. When two or more kinds of oxides of alkaline earth metals are contained, the total content of the above oxides of alkaline earth metals is 1% by mass or more and 25% by mass or less.

### (Oxide of alkaline earth metal is contained in water glass structure)

When the oxide of an alkaline earth metal is contained in the water glass structure, the glass structure can be stabilized. When the oxide of an alkaline earth metal is not contained in the water glass structure, the glass structure is not stabilized, so that the powder of the flux absorbs moisture, and the amount of diffusible hydrogen is increased. Thus, the low temperature cracking resistance is deteriorated. Whether the oxide of an alkaline earth metal is contained in the water glass structure can be determined by X-ray mapping with Energy Dispersive X-ray Spectrometry (EDS). The kinds of alkaline earth metal elements can also be analyzed based on EDS.

### (Other components of flux)

In the present embodiment, any chemical components indicated by "Flux Chemical Component Symbols" defined in standards relating to a flux for submerged arc welding such as those described in ISO 14174:2012 (Welding consumables - Fluxes for submerged arc welding and electroslag welding - Classification) or JIS Z3352:2010 (Flux for submerged arc welding) can be contained as the other components of the flux. That is, when the flux in the present embodiment contains the other components of the flux in an amount indicated by the standards, the effects of the present invention can be obtained even after high-temperature sintering at 600°C to 1,200°C. Examples of the other components of the flux include one or two or more selected from Fe, Fe-Si, Fe-Mn, SiO₂, CaF₂, MgO, MnO, Al₂O₃, TiO₂, ZrO₂, Na₂O, K₂O, Li₂O, B₂O₃ and CO₂. In addition, examples of the other components of the flux also include a binder such as an alkali silicate (for example, sodium silicate (water glass)). These may be contained as long as the effects of the present invention are not impaired. Further, as the other components of the flux, P, S, As, Ta and the like may be contained as unavoidable impurities and these may be contained within the range not impairing the effects of the present invention.

Among those listed as the other components of the flux, in the case of the present embodiment, for example, SiO₂ may be contained in an amount of 5% by mass or more and 50% by mass or less, CaF₂ may be contained in an amount of 3% by mass or more and 45% by mass or less, MgO may be contained in an amount of 1% by mass or more and 30% by mass or less, MnO may be contained in an amount of 1% by mass or more and 25% by mass or less, and Al₂O₃ may be contained in an amount of 1% by mass or more and 35% by mass or less.

### (SiO₂: 5% by mass or more and 50% by mass or less)

SiO₂ has the effect of contributing to a smooth bead shape. Since the effect can be obtained effectively when SiO₂ is contained in an amount of 5% by mass or more and 50% by mass or less, it can be said that the case of containing SiO₂ within this range is a preferred aspect. However, since the flux in the present embodiment can give excellent low temperature cracking resistance even when SiO₂ is contained in an amount outside the upper or lower limit of the above range, respectively, SiO₂ may be contained without being limited to this range. However, since the viscosity of the slag is high when SiO₂ is contained in an amount higher than the upper limit of the above range, the slag removability tends to be deteriorated, and the seizing of the slag tends to be severe. It is preferable to contain SiO₂ in an amount of 5% by mass or more and 50% by mass or less from the viewpoint of effectively obtaining the above effects and from the viewpoint of ensuring good slag removability. From the viewpoint of further improving the effect of contributing to a smooth bead shape, SiO₂ is contained in an amount of preferably 6% by mass or more, and more preferably 7% by mass or more. In addition, from the viewpoint of giving better slag removability, SiO₂ is contained in an amount of preferably 48% by mass or less, and more preferably 46% by mass or less. SiO₂ also contains, for example, those added from a binder such as water glass.

### (CaF₂: 3% by mass or more and 45% by mass or less)

CaF₂ has the effect of enhancing the electrical conductivity and fluidity of the fused slag, and the slag removability, and has the effect of influencing the high temperature viscosity of the fused slag. Since the effect can be obtained effectively when CaF₂ is contained in an amount of 3% by mass or more and 45% by mass or less, it can be said that the case of containing CaF₂ within this range is a preferred aspect. However, since the flux in the present embodiment can give excellent low temperature cracking resistance even when CaF₂ is contained in an amount outside the upper or lower limit of the above range, respectively, CaF₂ may be contained without being limited to this range. From the viewpoint of further improving the effects, CaF₂ is contained in an amount of preferably 4% by mass or more, and more preferably 5% by mass or more. From the same viewpoint, CaF₂ is contained in an amount of preferably 43% by mass or less, and more preferably 41% by mass or less.

### (MgO: 1% by mass or more and 30% by mass or less)

MgO is a component that greatly contributes to the improvement of the slag removability, and has the effect of making the slag removability good. Since the effect can be obtained effectively when MgO is contained in an amount of 1% by mass or more and 30% by mass or less, it can be said that the case of containing MgO within this range is a preferred aspect. However, since the flux in the present embodiment can give excellent low temperature cracking resistance even when MgO is contained in an amount outside the upper or lower limit of the above range, respectively, MgO may be contained without being limited to this range. From the viewpoint of further improving the effects, MgO is contained in an amount of preferably 2% by mass or more, and more preferably 3% by mass or more. From the same viewpoint, MgO is contained in an amount of preferably 29% by mass or less, and more preferably 28% by mass or less.

### (MnO: 1% by mass or more and 25% by mass or less)

MnO influences the viscosity and solidification temperature of the fused slag, and has an effect of improving the pock mark resistance. Since the effect can be obtained effectively when MnO is contained in an amount of 1% by mass or more and 25% by mass or less, it can be said that the case of containing MnO within this range is a preferred aspect. However, since the flux in the present embodiment can give excellent low temperature cracking resistance even when MnO is contained in an amount outside the upper or lower limit of the above range, respectively, MnO may be contained without being limited to this range. From the viewpoint of further improving the effects, MnO is contained in an amount of preferably 2% by mass or more, and more preferably 3% by mass or more. From the same viewpoint, MnO is contained in an amount of preferably 24% by mass or less, and more preferably 23% by mass or less.

### (Al₂O₃: 1% by mass or more and 35% by mass or less)

Al₂O₃ is a component that acts on the melting point of the slag, and has the effect of maintaining the linearity of the toe portion of the bead and the effect of improving the slag removability. Since the effect can be obtained effectively when Al₂O₃ is contained in an amount of 1% by mass or more and 35% by mass or less, it can be said that the case of containing Al₂O₃ within this range is a preferred aspect. However, since the flux in the present embodiment can give excellent low temperature cracking resistance even when Al₂O₃ is contained in an amount outside the upper or lower limit of the above range, respectively, Al₂O₃ may be contained without being limited to this range. From the viewpoint of further improving the effects, Al₂O₃ is contained in an amount of preferably 2% by mass or more, and more preferably 3% by mass or more. From the same viewpoint, Al₂O₃ is contained in an amount of preferably 33% by mass or less, and more preferably 31% by mass or less.

In addition, the following components may be contained.
Na₂O + K₂O: 6.5% by mass or less, preferably 0.5% by mass to 6.5% by mass
FeO: 6.5% by mass or less
ZrO₂: 0.70% by mass or less, preferably 0.05% by mass to 0.70% by mass
B₂O₃: 3.0% by mass or less, preferably 0.1% by mass to 3.0% by mass
TiO₂: 6.0% by mass or less, preferably 0.2% by mass to 6.0% by mass

### (Moisture content as measured in accordance with JIS K0068:2001)

It is preferred that, in the flux in the present embodiment, a moisture content immediately after drying, as measured in accordance with JIS K0068:2001 "Test methods for moisture content of chemical products", is 200 ppm or less, and a moisture content after moisture absorption for 24 hours, as measured in accordance with JIS K0068:2001, is 1000 ppm or less. In addition to the feature that the moisture content contained in the flux is small, since the amount of moisture absorption is small as described above, a flux for submerged arc welding giving a further reduced amount of diffusible hydrogen and giving excellent low temperature cracking resistance can be obtained. It is preferable to measure the moisture content by the Karl Fischer titration method (water vaporization-coulometric titration method) defined in JIS K0068:2001. In the measurement of the moisture content, it is preferable to use a flux for measurement after sieving with 20 × 30 mesh in order to eliminate the influence of particle size distribution as much as possible. Examples of conditions of the moisture content measurement include an extraction temperature of 750°C and an extraction gas of atmosphere. The term "immediately after drying" means that the measurement is performed within 5 minutes after taking out the test material from a drier. Examples of drying conditions by the dryer include 250°C × 1 hour. The term "after moisture absorption for 24 hours" means that the measurement is performed within 5 minutes after taking out the test material from a thermo-hygrostat. Examples of treatment conditions by the thermo-hygrostat include 30°C, 80% R.H. × 24 hr.

The flux having smaller moisture content is preferable. For example, the moisture content immediately after drying is more preferably 100 ppm or less, and the moisture content after moisture absorption for 24 hours is more preferably 500 ppm or less.

### (Method for producing flux)

In the flux in the present embodiment, raw materials are blended such that the component compositions of the oxide of an alkaline earth metal fall within the above ranges. Specifically, the alkaline earth metal raw material is blended in an amount of 1% by mass or more and 25% by mass or less. At this time, SiO₂, CaF₂, MgO, MnO, Al₂O₃, or the like may be blended as needed. Then, the blend is kneaded with a binder, following by subjecting to granulating and sintering. In the case of using water glass as a binder, a content of SiO₂ contained therein is also included in the above content.

As the above alkaline earth metal raw material, it is preferable to use one which decomposes at 600°C or higher during sintering the mixture of all the raw materials. Therefore, since the alkaline earth metal and water glass are reacted during sintering at 600°C or higher and the oxide of an alkaline earth metal is contained in the water glass structure covering the powder surface, the glass structure can be stabilized. The upper limit of the sintering temperature is, for example, 1,200°C.

It is preferred that the alkaline earth metal raw material is an alkaline earth metal carbonate. Further, it is preferred that the alkaline earth metal carbonate is one or both of CaCO₃ and BaCO₃. Therefore, a flux can be obtained inexpensively while being easy to handle during the production.

As the binder, polyvinyl alcohol may also be used, for example. Methods for granulation are not particularly limited, and a rolling granulator, extrusion granulator, or the like may be used.

It is preferred that the granulated flux is subjected to particle size regulation treatments such as dust removal and disaggregation of coarse particles using a ball mill to have an average particle diameter of 2.5 mm or less. The sintering after the granulation can be performed using a rotary kiln, a stationary batch furnace, a belt type sintering furnace or the like. The sintering temperature at that time may be, for example, 600°C or higher, more specifically 600°C to 1,200°C. The average particle diameter of the flux can be measured, for example, in accordance with JIS Z8815:1994 (Test sieving - General requirements) using a sieve defined in JIS Z8801-1:2006 (Test Sieves - Part 1: Test sieves of metal wire cloth).

The flux produced in this manner contains an oxide of an alkaline earth metal in an amount of 1% by mass to 25% by mass, and the oxide of the alkaline earth metal is contained in a water glass structure.

### (Use of flux)

It is preferred that the flux in the present embodiment can be used for all the construction methods, such as multilayer welding, double-sided one-layer welding or one-side one-pass welding. In the flux in the present embodiment, the moisture absorption amount is reduced to the same extent as the fused flux. Thus, the flux can reduce the amount of diffusible hydrogen and can give excellent low temperature cracking resistance.

### (Welding method and welding condition for submerged arc welding)

The welding method for submerged arc welding using the flux in the present embodiment is not limited to specific conditions. As an embodiment of the welding method, the welding method includes, for example: a step of covering a welding portion of a member to be welded, specifically a portion where end faces of two steel plates contact with each other, with the flux in the present embodiment; and a step of generating an arc in a state where a tip of a wire (electrode) is inserted in the flux to perform the welding, and these steps are performed in the above order.

As for the welding conditions of the submerged arc welding using the flux in the present embodiment, the number of electrodes is not limited, and a single electrode or multiple electrodes (two to six electrodes or the like) can be applied. The polarity is not limited, and either a direct current or an alternating current can be applied. A welding current in the range of 100 A to 3,000 A, an arc voltage in the range of 10 V to 100 V, and a welding speed in the range of 10 cm/min to 600 cm/min can be applied.

### (Others)

In the present embodiment, the workpiece to be welded is, for example, mild steel or low alloy steel.

### Examples

Next, experiments for confirming the effects of the present invention are described.

CaCO₃ and BaCO₃, which are carbonates of an alkaline earth metal, as alkaline earth metal raw materials were blended with powder raw materials such as SiO₂, CaF₂, MgO, MnO and Al₂O₃, the mixture was then blended and kneaded with water glass as a binder, then the kneaded matter was granulated and the granulated matter was sintered. Granulation was performed using an extrusion granulator. The granulated flux was subjected to particle size regulation treatments such as dust removal and disaggregation of coarse particles using a ball mill to have an average particle diameter of 2.5 mm or less. Sintering was performed using a rotary kiln. The sintering conditions were set to 850°C × 1 hour. In this way, fluxes having the composition shown in Table 1 were obtained.

In this way, the produced fluxes in No. 1 to No. 35 were subjected to measurement of moisture content immediately after drying, measurement of moisture content after moisture absorption for 24 hours, measurement of the amount of diffusible hydrogen immediately after drying, and confirmation of low temperature cracking resistance. In addition, the slag removability and the bead appearance were also evaluated. These measurements, confirmations and evaluations were performed as follows.

### <Measurement of moisture content immediately after drying>

The flux used for the test material was a flux after sieving with 20 × 32 mesh in order to eliminate the influence of particle size distribution as much as possible.

The test material was dried in a drier at 250°C for 1 hour. After the drying, the amount of water contained in the flux within 5 minutes after taking out the test material from the dryer was measured by the Karl Fischer method (KF method (water vaporization-coulometric titration method)) in accordance with JIS K0068:2001 "Test methods for moisture content of chemical products" under an air atmosphere of 750°C.

### <Measurement of moisture content after moisture absorption for 24 hours>

The flux used for the test material was a flux after sieving with 20 × 32 mesh in order to eliminate the influence of particle size distribution as much as possible.

The test material was dried in a drier at 250°C for 1 hour, and then, the test material was maintained (subjected to hygroscopic treatment) for 24 hours in a thermo-hygrostat under an atmosphere of temperature of 30°C and relative humidity of 80% to allow the flux to absorb moisture. After the moisture absorption, the amount of water contained in the flux within 5 minutes after taking out the test material from the thermo-hygrostat was measured by the Karl Fischer method (KF method (water vaporization-coulometric titration method)) in accordance with JIS K0068:2001 "Test methods for moisture content of chemical products" under an air atmosphere of 750°C.

### <Measurement of amount of diffusible hydrogen immediately after drying>

The amount of diffusible hydrogen in the weld metal was measured in accordance with AWS A4.3 (GC).

The flux used for the test material was subjected to pre-drying at 250°C for 1 hour, and welding was performed using a wire having a diameter of 4.0 mm, which corresponds to AWS A5.17 EH14.

The welding conditions were as follows: the current was 525 A, the voltage was 29 V, the welding speed was 42 cm/min, the polarity was direct current electrode positive (DCEP), and the flux distribution height and the electrode extension were 30 mm. As a steel plate to be welded, ASTM A36 was used.

### <Confirmation of low temperature cracking resistance>

The evaluation of the low temperature cracking resistance was performed by a window frame restraint weld cracking test.

The window frame restraint weld cracking test is a test in which test welding is performed on one where the test plate was restraint welded on a large frame with a window made of thick plate, and the lateral crack susceptibility of a high tensile steel welded joint is mainly examined.

The flux used for the test material was subjected to pre-drying at 250°C for 1 hour, and the wire used therewith was a wire having a diameter of 4.0 mm, which corresponds to AWS A5.17 EH14.

The welding conditions were as follows: the current was 525 A, the voltage was 29 V, the welding speed was 42 cm/min, the polarity was DCEP, and the flux distribution height and the electrode extension were 30 mm. The thickness of the steel plate to be welded was 50 mm, the groove shape was V-groove, the groove angle was 60°, the route face was 10 mm, and the preheating temperature and the interpass temperature were 25°C or lower.

Then, an ultrasonic flaw detection test was performed on the welded potion in accordance with JIS Z3060:2002, and the occurrence of low temperature cracking was confirmed.

The low temperature cracking resistance was determined to be passed if there was no low temperature cracking and was determined to be failed if there was a low temperature cracking.

### <Evaluation on slag removability>

The slag removability was evaluated by the degree of ease of slag removal and the presence or absence of seizing. Specifically, the case where slag was naturally removed and no seizing was confirmed was evaluated as "5", the case where slag was naturally removed but the number of positions where seizing occurred was 3 or less per unit welding length (1 m) was evaluated as "4", the case where slag was not naturally removed and the number of positions where seizing occurred was 3 or less per unit welding length (1 m) was evaluated as "3", the case where slag was not naturally removed and the number of positions where seizing occurred was 4 to 9 per unit welding length (1 m) was evaluated as "2", and the case where slag was not naturally removed and the number of positions where seizing occurred was 10 or more per unit welding length (1 m) was evaluated as "1". As for the slag removability, those evaluated as "5" to "3" were determined to be preferable.

### <Evaluation on bead appearance>

The bead appearance was mainly evaluated on bead seam and luster, and the evaluation was performed by visually observing the welded portion. As a result, the case where disturbance in bead seam was not observed and metallic luster in bead was observed was evaluated as "5", the case where the number of positions where disturbance occurred in bead seam was 1 or less per unit welding length (1 m) and metallic luster in bead was observed was evaluated as "4", the case where the number of positions where disturbance occurred in bead seam was 1 or less per unit welding length (1 m) and no metallic luster in bead was observed was evaluated as "3", the case where the number of positions where disturbance occurred in bead seam was 2 to 4 per unit welding length (1 m) and no metallic luster in bead was observed was evaluated as "2", and the case where the number of positions where disturbance occurred in bead seam was 5 or more per unit welding length (1 m) and no metallic luster in bead was observed was evaluated as "1". As for the bead appearance, those evaluated as "5" to "3" were determined to be preferable.

Table 1 shows the component compositions of the fluxes and the results of the above measurements, confirmations and evaluations.

**Table 1**

| No. | SiO₂ (% by mass) | CaO (% by mass) | BaO (% by mass) | CaF₂ (% by mass) | MgO (% by mass) | MnO (% by mass) | Al₂O₃ (% by mass) | Moisture content immediately after drying (ppm) | Moisture content after moisture absorption for 24 hr (ppm) | Amount of diffusible hydrogen immediately after drying (mL/100 g) | Low temperature cracking | Slag removability | Bead appearance |
|---|---|---|---|---|---|---|---|---|---|---|---|---|---|
| 1 | 50 | 6 | 2 | 5 | 8 | 3 | 15 | 85 | 530 | 3.4 | No | 5 | 4 |
| 2 | 5 | 14 | 3 | 25 | 7 | 12 | 23 | 62 | 417 | 3.2 | No | 5 | 5 |
| 3 | 15 | 25 | 0 | 17 | 5 | 18 | 9 | 59 | 474 | 2.4 | No | 5 | 4 |
| 4 | 22 | 1 | 1 | 28 | 6 | 6 | 25 | 67 | 472 | 2.9 | No | 4 | 5 |
| 5 | 8 | 0 | 13 | 29 | 10 | 10 | 19 | 119 | 707 | 3.9 | No | 4 | 5 |
| 6 | 14 | 0 | 25 | 3 | 15 | 13 | 19 | 58 | 550 | 3.5 | No | 4 | 5 |
| 7 | 7 | 11 | 1 | 34 | 4 | 8 | 24 | 73 | 411 | 2.1 | No | 5 | 4 |
| 8 | 19 | 23 | 0 | 8 | 3 | 18 | 18 | 110 | 658 | 4.5 | No | 5 | 4 |
| 9 | 19 | 20 | 1 | 6 | 3 | 13 | 27 | 33 | 202 | 0.8 | No | 5 | 5 |
| 10 | 16 | 2 | 6 | 22 | 13 | 10 | 20 | 37 | 285 | 1.0 | No | 5 | 5 |
| 11 | 17 | 4 | 20 | 4 | 7 | 15 | 22 | 11 | 205 | 1.9 | No | 4 | 4 |
| 12 | 10 | 15 | 2 | 18 | 7 | 2 | 35 | 30 | 327 | 1.5 | No | 5 | 5 |
| 13 | 6 | 4 | 0 | 55 | 4 | 7 | 13 | 95 | 441 | 2.1 | No | 5 | 1 |
| 14 | 6 | 7 | 2 | 45 | 7 | 10 | 12 | 59 | 422 | 2.4 | No | 5 | 4 |
| 15 | 26 | 12 | 8 | 3 | 16 | 4 | 20 | 74 | 486 | 2.9 | No | 5 | 5 |
| 16 | 27 | 9 | 1 | 2 | 3 | 13 | 34 | 73 | 438 | 3.1 | No | 1 | 3 |
| 17 | 6 | 10 | 7 | 9 | 35 | 11 | 11 | 60 | 441 | 2.8 | No | 3 | 1 |
| 18 | 7 | 8 | 6 | 10 | 30 | 14 | 14 | 69 | 518 | 2.1 | No | 5 | 5 |

| No. | SiO₂ (% by mass) | CaO (% by mass) | BaO (% by mass) | CaF₂ (% by mass) | MgO (% by mass) | MnO (% by mass) | Al₂O₃ (% by mass) | Moisture content immediately after drying (ppm) | Moisture content after moisture absorption for 24 hr (ppm) | Amount of diffusible hydrogen immediately after drying (mL/100)g | Low temperature cracking | Slag removability | Bead appearance |
|---|---|---|---|---|---|---|---|---|---|---|---|---|---|
| 19 | 13 | 11 | 3 | 31 | 1 | 2 | 28 | 68 | 458 | 2.3 | No | 4 | 5 |
| 20 | 18 | 21 | 2 | 22 | 0 | 13 | 13 | 85 | 479 | 3.2 | No | 2 | 3 |
| 21 | 13 | 2 | 5 | 11 | 16 | 30 | 12 | 60 | 494 | 3.0 | No | 3 | 2 |
| 22 | 8 | 6 | 4 | 17 | 6 | 25 | 23 | 74 | 484 | 2.8 | No | 4 | 4 |
| 23 | 16 | 12 | 8 | 20 | 21 | 1 | 11 | 76 | 463 | 3.5 | No | 4 | 4 |
| 24 | 20 | 11 | 7 | 14 | 14 | 0 | 23 | 73 | 541 | 2.1 | No | 2 | 5 |
| 25 | 12 | 7 | 1 | 19 | 4 | 6 | 40 | 76 | 428 | 3.3 | No | 3 | 1 |
| 26 | 10 | 6 | 2 | 20 | 10 | 6 | 35 | 65 | 451 | 2.4 | No | 4 | 5 |
| 27 | 24 | 21 | 2 | 14 | 25 | 2 | 1 | 87 | 541 | 3.1 | No | 4 | 5 |
| 28 | 11 | 15 | 1 | 28 | 21 | 13 | 0 | 62 | 430 | 2.6 | No | 1 | 4 |
| 29 | 15 | 0 | 0 | 22 | 10 | 25 | 17 | 284 | 1447 | 8.6 | Yes | 3 | 5 |
| 30 | 50 | 0 | 0 | 9 | 15 | 13 | 2 | 300 | 1512 | 8.3 | Yes | 5 | 4 |
| 31 | 5 | 0 | 0 | 28 | 22 | 6 | 28 | 295 | 1516 | 8.4 | Yes | 4 | 4 |
| 32 | 60 | 8 | 0 | 9 | 7 | 1 | 4 | 68 | 516 | 2.4 | No | 1 | 4 |
| 33 | 4 | 1 | 12 | 24 | 14 | 12 | 22 | 89 | 428 | 2.7 | No | 2 | 3 |
| 34 | 5 | 30 | 15 | 22 | 8 | 1 | 8 | 233 | 1232 | 7.2 | Yes | 5 | 3 |
| 35 | 11 | 10 | 30 | 4 | 18 | 11 | 5 | 276 | 1245 | 6.1 | Yes | 4 | 3 |

As shown in Table 1, it was confirmed that fluxes in No. 1 to No. 28, No. 32 and No. 33 caused no low temperature cracking and gave excellent low temperature cracking resistance (working examples). For each of these fluxes, the moisture content immediately after drying was 200 ppm or less, the moisture content after moisture absorption for 24 hours was 1000 ppm or less, and the amount of diffusible hydrogen was 5.0 mL/100 g or less. Among these, the fluxes in No. 1 to No. 12, No. 14, No. 15, No. 18, No. 19, No. 22, No. 23, No. 26, and No. 27 contained SiO₂, CaF2, MgO, MnO, and Al₂O₃ in a preferred range, and therefore, these cases were excellent not only in low temperature cracking resistance but also in slag removability and bead appearance. That is, it was confirmed that these fluxes were suitable for the case where not only low temperature cracking resistance but also slag removability and bead appearance were important.

In contrast, it was confirmed that fluxes in No. 29 to No. 31, No. 34 and No. 35 caused low temperature cracking and gave inferior low temperature cracking resistance (comparative examples).

Specifically, the fluxes in No. 29 to No. 31 did not contain the oxides (CaO, BaO) of alkaline earth metals, and as a result, the low temperature cracking resistance was inferior.

The fluxes in No. 34 and No. 35 contained the oxides of alkaline earth metals in an excessive amount, and as a result, the low temperature cracking resistance was inferior.

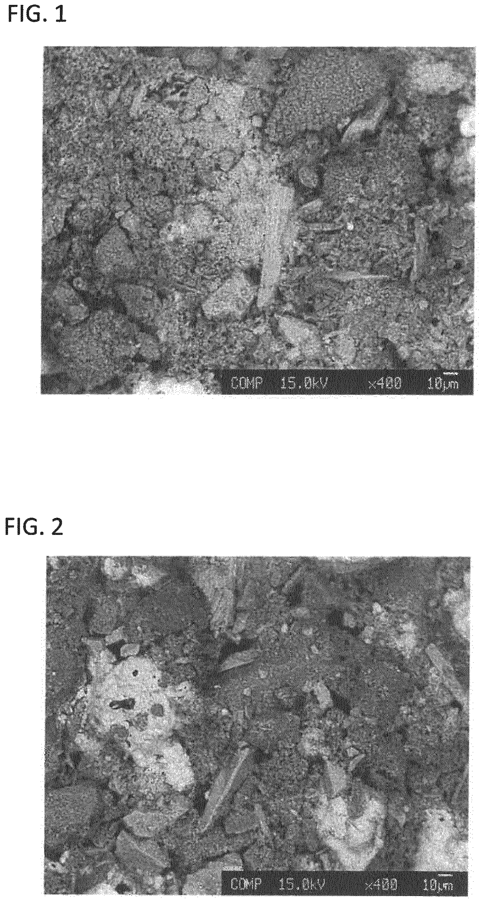

FIG. 1 shows a scanning electron microscope (SEM) photograph of the flux in No. 10 which is a working example. In addition, FIG. 2 shows an SEM photograph of the flux in No. 29 which is a comparative example.

As can be seen from the comparison between FIG. 1 and FIG. 2, in the flux in No. 10 shown in FIG. 1, the powder surface is covered with a glassy precipitate.

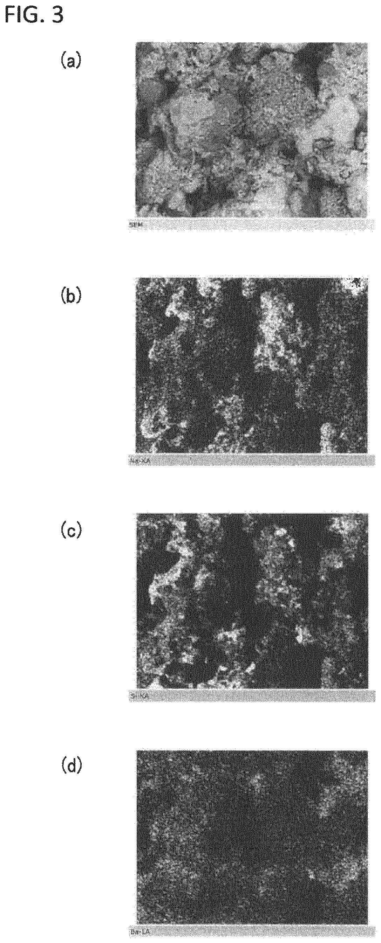

In addition, FIG. 3 shows an SEM photograph of the flux in No. 10 which is a working example ((a) in FIG. 3) and shows X-ray mappings by EDS at the same position as (a) ((b) to (d) in FIG. 3). In FIG. 3, (b) is an X-ray mapping for Na, (c) is an X-ray mapping for Si, and (d) is an X-ray mapping for Ba.

As shown in FIG. 3, since Ba is present at the same position as Na and Si of the water glass component, it can be seen that Ba is incorporated into the water glass structure.

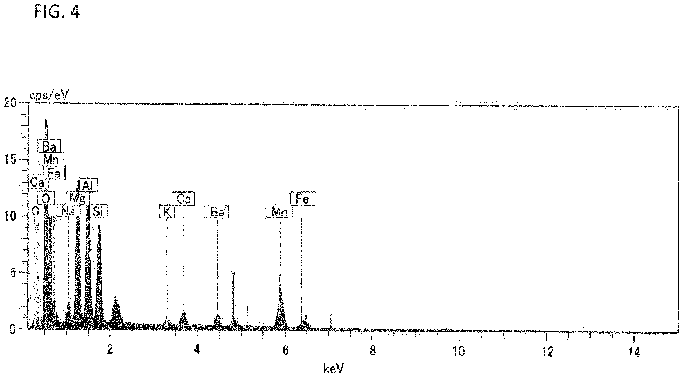

Further, FIG. 4 shows an EDS spectrum of the flux in No. 10 which is a working example. As shown in FIG. 4, Ba as an alkaline earth metal is detected.

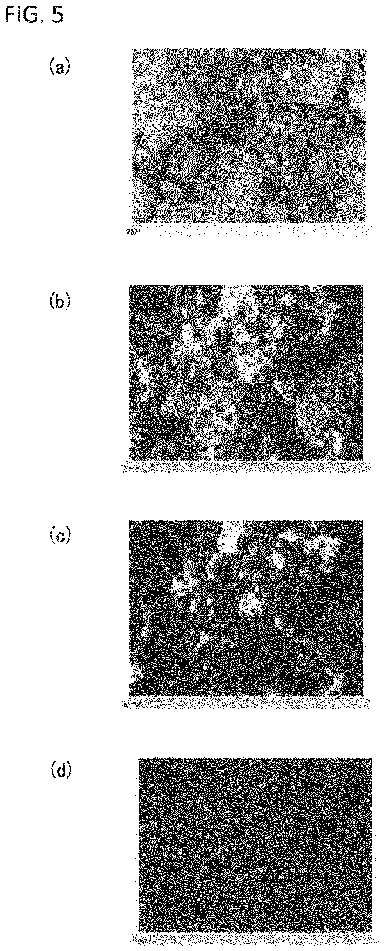

FIG. 5 shows an SEM photograph of the flux in No. 29 which is a comparative example ((a) in FIG. 5) and shows X-ray mappings by EDS at the same position as (a) ((b) to (d) in FIG. 5).

In FIG. 5, (b) is an X-ray mapping for Na, (c) is an X-ray mapping for Si, and (d) is an X-ray mapping for Ba.

As shown in FIG. 5, since Ba is not present at the same position as Na and Si of the water glass component, it can be seen that Ba is not incorporated into the water glass structure.

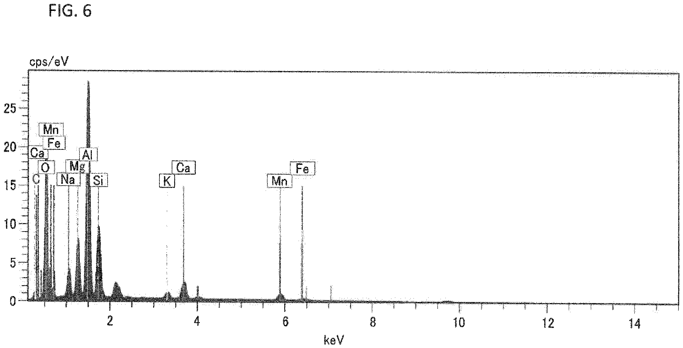

Further, FIG. 6 shows an EDS spectrum of the flux in No. 29 which is a comparative example. As shown in FIG. 6, Ba as an alkaline earth metal is not detected.

This application is based on Japanese Patent Application No. 2017-069912 filed on March 31, 2017, the entirety of which is incorporated herein by reference.

### Industrial Applicability

The flux for submerged arc welding in the present invention gives excellent low temperature cracking resistance, and is useful for various types of submerged arc welding for mild steel, low alloy steel and the like.

## Claims

1. A flux for submerged arc welding, comprising an oxide of an alkaline earth metal in an amount of 1% by mass or more and 25% by mass or less,
wherein the oxide of the alkaline earth metal is contained in a water glass structure.

2. The flux for submerged arc welding according to claim 1, wherein the alkaline earth metal is one or both of Ca and Ba.

3. The flux for submerged arc welding according to claim 1 or 2, wherein a moisture content immediately after drying, as measured in accordance with JIS K0068:2001, is 200 ppm or less, and a moisture content after moisture absorption for 24 hours, as measured in accordance with JIS K0068:2001, is 1000 ppm or less.

4. The flux for submerged arc welding according to claim 1 or 2, which is obtained by blending an alkaline earth metal raw material with water glass and sintering the blend at 600°C or higher.

5. The flux for submerged arc welding according to claim 4, wherein the alkaline earth metal raw material is an alkaline earth metal carbonate.

6. The flux for submerged arc welding according to claim 5, wherein the alkaline earth metal carbonate is one or both of CaCO₃ and BaCO₃.
